# EUROPEAN PATENT SPECIFICATION

(11) **EP 4 621 910 B1**
(45) Date of publication and mention of the grant of the patent: **11.11.2026**
(21) Application number: 23907855.3
(22) Date of filing: 22.12.2023
(51) Int. Cl.: H01M 10/0567, H01M 10/0525, H01M 10/0569, H01M 4/587

(54) **NON-AQUEOUS ELECTROLYTE AND LITHIUM SECONDARY BATTERY COMPRISING THE SAME**
NICHTWÄSSRIGER ELEKTROLYT UND LITHIUMSEKUNDÄRBATTERIE DENSELBEN UMFASSEND
ÉLECTROLYTE NON AQUEUX ET BATTERIE SECONDAIRE AU LITHIUM LE COMPRENANT

(30) Priority: 22.12.2022 KR 20220182372; 21.12.2023 KR 20230189008
(43) Date of publication of application: 24.09.2025
(73) Proprietor: LG Energy Solution, Ltd., Seoul 07335 (KR)
(72) Inventor: OH, Young Ho, Daejeon 34122 (KR); AHN, Kyoung Ho, Daejeon 34122 (KR); LEE, Chul Haeng, Daejeon 34122 (KR); HAN, Jun Hyeok, Daejeon 34122 (KR); JEONG, You Kyeong, Daejeon 34122 (KR); KO, Yoon Seok, Daejeon 34122 (KR)
(74) Representative: Hoffmann Eitle
(86) International application number: PCT/KR2023/021391
(87) International publication number: WO 2024/136572

(56) References cited:
- CN-A- 112 510 259
- JP-A- 2012 119 091
- KR-A- 20180 086 601
- KR-A- 20210 029 533
- US-A1- 2019 190 070
- US-A1- 2019 190 070

## Description

### Technical Field

The present disclosure relates to a non-aqueous electrolyte and a lithium secondary battery comprising the same.

### [BACKGROUND ART]

There is a need to develop technology for efficiently storing and utilizing electrical energy as personal IT devices and computer networks are developed with the recent development of information society and the accompanying dependency of society as a whole on the electrical energy is increased.

A secondary battery is a technology that is most suitable for various applications among developed technologies, and among the secondary batteries, a lithium secondary battery, which may be miniaturized to be applicable to a personal IT device and has the highest energy density, is in the spotlight.

Generally, lithium secondary batteries are prepared by injecting or impregnating a non-aqueous electrolyte into an electrode assembly comprising a positive electrode, a negative electrode, and a porous separator.

The uses of lithium-containing cobalt oxides, LiMnO₂ having a layered crystal structure, LiMn₂O₄ having a spinel crystal structure, lithium-containing nickel oxides (LiNiO₂), lithium nickel-cobalt-manganese transition metal oxides, lithium iron phosphate (e.g., LiFePO₄)-based compounds, etc. are considered as the positive electrode active material of such a lithium secondary battery.

On the other hand, PF₆- anions are thermally decomposed from lithium salts such as LiPF₆ contained in a non-aqueous electrolyte to form Lewis acids such as PF₅, which react with moisture to generate HF.

Materials such as PF₅ or HF may not only destruct a film formed on the electrode surface, but also cause the decomposition reaction of an organic solvent. The above-mentioned HF and PF₅ cause the elution of transition metals from the surface of the positive electrode active material which makes the lattice structure of the positive electrode active material unstable. This leads to the generation of active oxygen to further facilitate the decomposition of the organic solvent in the non-aqueous electrolyte, thereby accelerating gas generation.

JP 2012 119091 A discloses a non-aqueous electrolyte solution comprising a fluorine-containing (meth)acrylic-acid derivative, a nonaqueous solvent, and an electrolyte.

### [DISCLOSURE OF THE INVENTION]

### [TECHNICAL PROBLEM]

One object of the present invention is to solve the above problems, and the present disclosure aims to provide a non-aqueous electrolyte capable of forming a robust and low-resistance SEI film on the positive electrode and negative electrode, and of scavenging radicals such as active oxygen generated from the positive electrode, thereby improving the output characteristics, lifespan characteristics, and high-temperature storage characteristics of a lithium secondary battery simultaneously.

In addition, another object of the present disclosure is to provide a lithium secondary battery comprising the above-described non-aqueous electrolyte.

### [TECHNICAL SOLUTION]

The present disclosure provides a non-aqueous electrolyte comprising a lithium salt, an organic solvent, and an additive, wherein the additive includes at least one selected from compounds represented by the following Formula 1 and Formula 2.

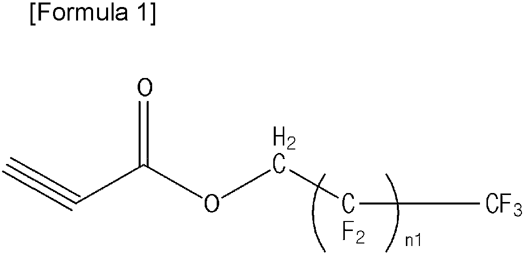

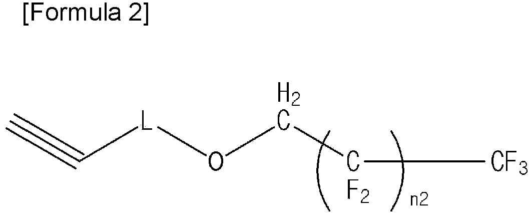

In Formula 1, n1 is an integer from 0 to 18.

In Formula 2, n2 is an integer from 0 to 18, and L is an alkylene group having 1 to 10 carbon atoms.

In addition, the present disclosure provides a lithium secondary battery comprising a positive electrode, a negative electrode facing the positive electrode, a separator interposed between the positive electrode and the negative electrode, and the above-mentioned non-aqueous electrolyte.

### [ADVANTAGEOUS EFFECTS]

The present disclosure relates to a non-aqueous electrolyte comprising at least one selected from compounds represented by Formula 1 and Formula 2 as an additive. Since the compound represented by Formula 1 includes a propargyl group (-C=C-) and a fluorine substituted alkyl group in the structure, it may be reduced before the organic solvent to form a robust and low-resistance SEI film on the surfaces of the positive electrode and negative electrode. In addition, since the compounds represented by Formula 1 and/or Formula 2 are capable of scavenging radicals such as active oxygen generated from the positive electrode, the oxidation resistance and flame retardancy of the positive electrode can be improved. Accordingly, the output characteristics (specifically, room temperature output characteristics and low-temperature output characteristics), lifespan characteristics, and high- temperature storage characteristics of a lithium secondary battery to which the non-aqueous electrolyte according to the present disclosure is applied can be improved simultaneously.

### [MODE FOR CARRYING OUT THE INVENTION]

First, prior to the description of the present disclosure, it will be understood that terms or words used in the present specification and claims shall not be construed as being limited to having meanings defined in commonly used dictionaries, but should be interpreted as having meanings and concepts consistent with the technical idea of the present disclosure based on the principle that an inventor may appropriately define concepts of the terms to best explain the disclosure.

Meanwhile, the terms used herein are used only to describe exemplary embodiments, and are not intended to limit the present disclosure. Singular forms are intended to include plural forms as well, unless the context clearly indicates otherwise.

It should be appreciated that the terms such as "including", "comprising", or "having" as used herein are intended to embody specific features, numbers, steps, elements, and/or combinations thereof, and does not exclude existence or addition of other specific features, numbers, steps, elements, and/or combinations thereof.

In the present specification, the expression "%" denotes wt % unless explicitly stated otherwise.

Before describing the present disclosure, the expressions "a" and "b" in the description of "a to b carbon atoms" in the specification each denote the number of carbon atoms included in a specific functional group. That is, the functional group may include "a" to "b" carbon atoms.

Also, unless otherwise defined in the specification, the expression "substitution" denotes that at least one hydrogen bonded to carbon is substituted with an element other than hydrogen, for example, an alkyl group having 1 to 5 carbon atoms or a fluorine element.

In the present specification, the mean particle diameter (D₅₀) may be defined as a particle diameter corresponding to 50% of the cumulative volume in the particle size distribution curve. The mean particle diameter (D₅₀) may be measured using, for example, a laser diffraction method. The laser diffraction method allows a particle diameter to be measured from a submicron region to several millimeters and can provide results with high reproducibility and high resolution.

Hereinafter, the present disclosure will be described in more detail.

### Non-Aqueous Electrolyte

The present disclosure relates to a non-aqueous electrolyte, and more specifically a non-aqueous electrolyte for a lithium secondary battery.

The non-aqueous electrolyte according to the present disclosure comprises a lithium salt, an organic solvent and an additive, wherein the additive includes at least one selected from compounds represented by the following Formula 1 and Formula 2.

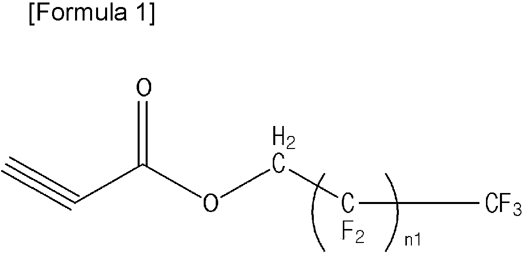

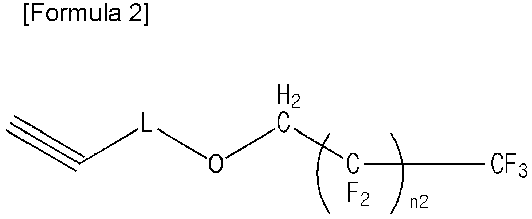

In Formula 1, n1 is an integer from 0 to 18.

In Formula 2, n2 is an integer from 0 to 18, and L is an alkylene group having 1 to 10 carbon atoms.

The present disclosure relates to a non-aqueous electrolyte comprising at least one selected from compounds represented by Formula 1 and Formula 2 as an additive.

Since the compound represented by Formula 1 includes a propargyl group (-C=C-) and a fluorine substituted alkyl group in the structure, it may be reduced before the organic solvent and may form a robust and low-resistance SEI film on the surfaces of the positive electrode and negative electrode. In addition, since the compounds represented by Formula 1 and/or Formula 2 are capable of scavenging radicals such as active oxygen generated from the positive electrode, the oxidation resistance and flame retardancy of the positive electrode can be improved. Accordingly, the output characteristics (specifically, room-temperature output characteristics and low-temperature output characteristics), lifespan characteristics, and high-temperature storage characteristics of a lithium secondary battery to which the non-aqueous electrolyte according to the present disclosure is applied can be improved simultaneously.

### (1) Lithium Salt

First, a lithium salt will be described as follows.

In the non-aqueous electrolyte solution for a lithium secondary battery according to an embodiment of the present disclosure, any lithium salt typically used in an electrolyte solution for a lithium secondary battery may be used as the lithium salt without limitation, and, for example, the lithium salt may include Li⁺ as a cation, and may include at least one selected from F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, B₁₀Cl₁₀⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, CH₃SO₃⁻, CF₃(CF₂)₇SO₃⁻, CF₃CO₂⁻, CH₃CO₂⁻, SCN⁻ and (CF₃CF₂SO₂)₂N⁻ as an anion. Specifically, the lithium salt may include at least one selected from LiCl, LiBr, Lil, LiBF₄, LiClO₄, LiAlO₄, LiAlCl₄, LiPF₆, LiSbF₆, LiAsF₆, LiB₁₀Cl₁₀, LiBOB (LiB(C₂O₄)₂), LiCF₃SO₃, LiTFSI (LiN(SO₂CF₃)₂), LiFSI (LiN(SO₂F)₂), LiCH₃SO₃, LiCF₃CO₂, LiCH₃CO₂ and LiBETI (LiN(SO₂CF₂CF₃)₂). Specifically, the lithium salt may include a single material selected from LiBF₄, LiClO₄, LiPF₆, LiBOB (LiB(C₂O₄)₂), LiCF₃SO₃, LiTFSI (LiN(SO₂CF₃)₂), LiFSI (LiN(SO₂F)₂) and LiBETI (LiN(SO₂CF₂CF₃)₂) or a mixture of two or more thereof. More specifically, the lithium salt may include LiPF₆.

The lithium salt may be appropriately changed in a normally usable range, but may be present in a concentration of 0.8M to 3.0M, specifically, 1.0M to 3.0M in the electrolyte solution to obtain an optimum effect of forming a film for preventing corrosion of an electrode surface.

In the case in which the concentration of the lithium salt satisfies the above range, the viscosity of the non-aqueous electrolyte solution may be controlled so that optimum impregnability may be achieved, and an effect of improving the capacity characteristics and cycle characteristics of the lithium secondary battery may be obtained by improving the mobility of lithium ions.

### (2) Organic Solvent

The organic solvent is a non-aqueous solvent commonly used in lithium secondary batteries, and is not limited as long as decomposition due to an oxidation reaction or the like during the charging and discharging of the battery can be minimized.

Specifically, the organic solvent may include a cyclic carbonate-based organic solvent and a linear carbonate-based organic solvent.

The cyclic carbonate-based organic solvent is an organic solvent having high viscosity and a high dielectric constant, and thus, is an organic solvent capable of dissociating a lithium salt well in an electrolyte, and specific examples thereof may include at least one organic solvent selected from ethylene carbonate (EC), propylene carbonate (PC), 1,2-butylene carbonate, 2,3-butylene carbonate, 1,2-pentylene carbonate, 2,3-pentylene carbonate, and vinylene carbonate and more specifically may include ethylene carbonate.

In addition, the linear carbonate-based organic solvent is an organic solvent having low viscosity and a low dielectric constant, specifically may include at least one organic solvent selected from dimethyl carbonate (DMC), diethyl carbonate (DEC), dipropyl carbonate, ethylmethyl carbonate (EMC), methylpropyl carbonate, and ethylpropyl carbonate, and more specifically, may include ethylmethyl carbonate (EMC).

The linear carbonate-based organic solvent specifically may include ethylmethyl carbonate and dimethyl carbonate, and more specifically may include ethylmethyl carbonate and dimethyl carbonate in a volume ratio of 60:40 to 90:10.

The organic solvent may be a mixture of a cyclic carbonate-based organic solvent and a linear carbonate-based organic solvent, wherein the cyclic carbonate-based organic solvent and the linear carbonate-based organic solvent may be mixed in a volume ratio of 10:90 to 50:50, specifically 15:85 to 40:60.

Meanwhile, the organic solvent may be used by adding organic solvents commonly used in non-aqueous electrolytes without limitation, if necessary. For example, it may further include at least one organic solvent selected from an ester-based organic solvent, an ether-based organic solvent, a glyme-based solvent, and a nitrile-based organic solvent.

The ester-based organic solvent may include at least one organic solvent selected from methyl acetate, ethyl acetate, propyl acetate, methyl propionate, ethyl propionate, propyl propionate, butyl propionate, γ-butyrolactone, γ-valerolactone, γ-caprolactone, σ-valerolactone, and ε-caprolactone.

Any one selected from dimethyl ether, diethyl ether, dipropyl ether, methylethyl ether, methylpropyl ether, ethylpropyl ether, 1,3-dioxolane (DOL), and 2,2-bis (trifluoromethyl )-1,3-dioxolane (TFDOL), and a mixture of two or more thereof may be used as the ether-based solvent, but is not limited thereto.

The glyme-based solvent has a high dielectric constant and low surface tension compared to linear carbonate-based organic solvents, and may include at least one selected from dimethoxyethane (glyme, DME), diethoxyethane, digylme, triglyme, and tetra-glyme (TEGDME) as a solvent with low reactivity with metals, but is not limited thereto.

The nitrile-based solvent may include one or more selected from acetonitrile, propionitrile, butyronitrile, valeronitrile, caprylonitrile, heptanenitrile, cyclopentanecarbonitrile, cyclohexanecarbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, but is not limited thereto.

Meanwhile, the remainder excluding the lithium salt and additive in the non-aqueous electrolyte may all be organic solvents unless otherwise stated.

### (3)Additive

The non-aqueous electrolyte of the present disclosure includes an additive.

The additive includes a compound represented by the following formula (1).

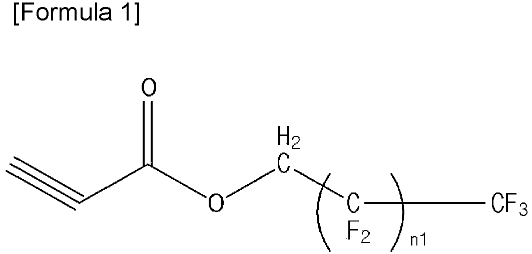

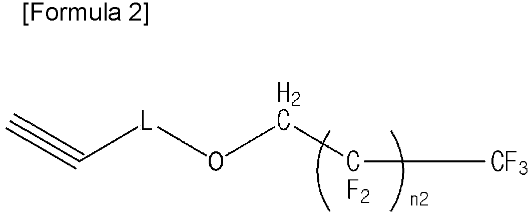

In Formula 1, n1 is an integer from 0 to 18.

In Formula 2, n2 is an integer from 0 to 18, and L is an alkylene group having 1 to 10 carbon atoms.

Specifically, as at least one compound selected from compounds represented by Formula 1 and Formula 2 contains a propargyl functional group in the structure, it can be easily reduced and decomposed on the surface of the negative electrode, thereby forming an SEI film with low resistance and a high passivation ability. Therefore, when a non-aqueous electrolyte containing the compound represented by Formula 1 as an electrolyte solution additive is used, this can prevent a self-discharge reaction of the negative electrode due to the additional reductive decomposition reaction of the electrolyte solution caused by the instability of the SEI film.

Also, at least one compound selected from compounds represented by Formula 1 and Formula 2 forms a film which has secured oxidation resistance on the surface of the positive electrode by including an alkyl group substituted with a fluorine element at the end of the structure to suppress the elution of transition metals from the positive electrode and suppress the eluted transition metals from being electrodeposited and precipitated on the negative electrode, thereby preventing an internal short circuit. In addition, an alkyl group substituted with a fluorine element with excellent flame retardancy and incombustibility contained in the molecular structure can form a passivation film on the surface of the positive electrode that acts as a radical scavenger caused by the fluorine element and ensures an excellent oxidation resistance simultaneously. As a result, side reactions between the electrode and the electrolyte solution are controlled, making it possible to provide a lithium secondary battery with improved lifespan characteristics at room temperature and a low temperature. In addition, since at least one compound selected from compounds represented by Formula 1 and Formula 2 contains one or two oxygen elements in its molecular structure, the oxidation stability is improved compared to compounds containing three or more oxygen elements, thereby improving high voltage stability and the durability of the electrolyte.

As such, the compound represented by Formula 1 includes a fluorine-containing alkyl group and a propargyl group having excellent flame retardancy and non-flammability to form a robust SEI film having low resistance on the negative electrode, thereby suppressing the additional reductive decomposition of the electrolyte solution, but also preventing the self-discharge reaction of the negative electrode. Thus, a lithium secondary battery that suppresses an increase in initial resistance and has improved room temperature and low-temperature output characteristics may be provided.

In Formula 1, n1 may be an integer from 0 to 18, specifically, an integer from 0 to 10, more specifically an integer from 0 to 5, and even more specifically an integer from 1 to 3.

Also, in Formula 2, n2 is an integer from 0 to 18, specifically, an integer from 0 to 10, more specifically an integer from 0 to 7, and even more specifically an integer from 3 to 7. If n1 or n2 satisfies the above range, the thermal properties of the compound itself can be improved, and the stability of the film formed therefrom can be expected. In Formula 1 and Formula 2, when n1 and n2 each exceed 18, the viscosity and non-polarity of the material increase as the fluorine element is contained in excess, and the solubility in the electrolyte decreases, and the ionic conductivity decreases. This may result in an inferior battery performance.

In Formula 2, L may be an alkylene group having 1 to 10 carbon atoms; specifically, it may be an alkylene group having 1 to 3 carbon atoms; more specifically, it may be selected from a methylene group and an ethylene group; and more specifically, it may be a methylene group.

The compound represented by Formula 1 may preferably include at least one selected from compounds represented by Formula 1-1, Formula 1-2 and Formula 1-3, and more preferably may include the compound represented by Formula 1-1 below.

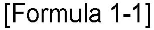

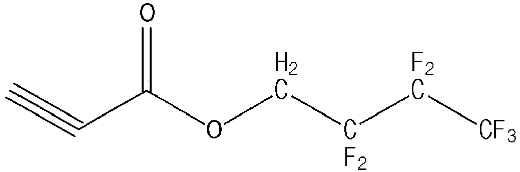

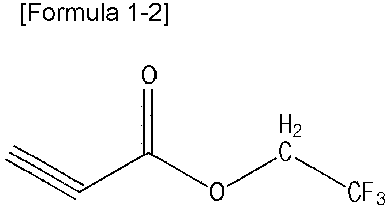

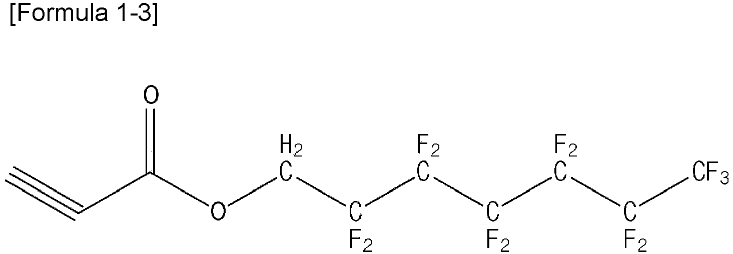

In addition, the compound represented by Formula 2 may preferably include at least one selected from compounds represented by Formula 2-1, Formula 2-2 and Formula 2-3, and more preferably it may include the compound represented by Formula 2-3 below.

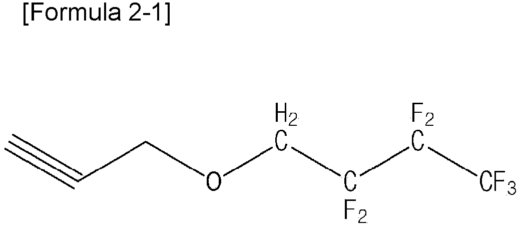

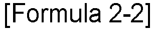

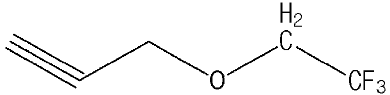

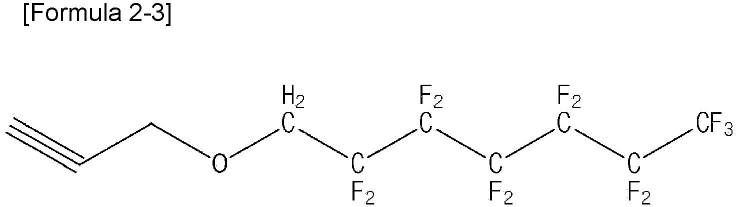

Meanwhile, the additive may be included in an amount of 0.01 wt% to 10 wt% in the non-aqueous electrolyte.

When the additive is included in the above ranges in the non-aqueous electrolyte, a low-resistance SEI film is formed on the surface of the negative electrode, while minimizing disadvantages such as side reactions, capacity degradation and resistance increase caused by additives, which may improve the effect of transferring the lithium. The self-discharge reaction of the negative electrode may be prevented by suppressing the additional reductive decomposition reaction of the electrolyte solution. Specifically, in a case in which the content of the compound represented by Formula 1 is 0.01wt% or more, a stable film is formed during battery operation time to form a low-resistance SEI film on the negative electrode, thereby improving battery output characteristics. In addition, in a case in which the content the compound represented by Formula 1 is 10.0 wt% or less, the viscosity of the non-aqueous electrolyte solution may be controlled so that optimum impregnability may be achieved, an increase in battery resistance due to the decomposition of additives may be effectively suppressed, and the ionic conductivity in the battery may be also further increased to prevent the degradation of output characteristics.

Specifically, the compound represented by Formula 1 may be included in an amount of 0.05 wt% to 8 wt%, more specifically 0.1 wt% to 5 wt%, and even more specifically 0.1 wt% to 3 wt% in the non-aqueous electrolyte.

In order to prevent the non-aqueous electrolyte from being decomposed to cause collapse of the negative electrode in a high output environment, or further improve low-temperature high-rate discharge characteristics, high-temperature stability, overcharge protection, and a battery swelling suppression effect at high temperatures, the non-aqueous electrolyte may further include an auxiliary additive along with the additive as necessary.

Examples of the auxiliary additive may be at least one selected from a cyclic carbonate-based compound, a halogen-substituted carbonate-based compound, a sultone-based compound, a sulfate-based compound, a phosphate-based or phosphite-based compound, a borate-based compound, a nitrile-based compound, a benzene-based compound, an amine-based compound, a silane-based compound, and a lithium salt-based compound.

The cyclic carbonate-based compound, for example, may include vinylene carbonate (VC) or vinyl ethylene carbonate.

The halogen-substituted carbonate-based compound, for example, may include fluoroethylene carbonate (FEC).

The sultone-based compound, for example, may include at least one selected from 1,3-propane sultone (PS), 1,4-butane sultone, ethane sultone, 1,3-propene sultone (PRS), 1,4-butene sultone, and 1-methyl-1,3-propene sultone.

The sulfate-based compound, for example, may include ethylene sulfate (Esa), trimethylene sulfate (TMS), or methyl trimethylene sulfate (MTMS).

The phosphate-based or phosphite-based compound, for example, may be at least one selected from lithium difluoro(bisoxalato)phosphate, lithium difluorophosphate, tris(trimethylsilyl)phosphate, tris(trimethylsilyl)phosphite, tris(2,2,2-trifluoroethyl)phosphate, and tris(trifluoroethyl)phosphite.

The borate-based compound, for example, may include tetraphenylborate and lithium difluoro(oxalato)borate (LiODFB) or lithium bis(oxalato)borate (LiB(C₂O₄)₂, LiBOB), etc.

The nitrile-based compound, for example, may be at least one compound selected from succinonitrile, adiponitrile, acetonitrile, propionitrile, butyronitrile, valeronitrile, caprylonitrile, heptanenitrile, cyclopentanecarbonitrile, cyclohexanecarbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound, for example, may be fluorobenzene, the amine-based compound may be triethanolamine or ethylenediamine, etc. and the silane-based compound may be tetravinylsilane, etc.

The lithium salt-based compound is a compound different from the lithium salt included in the non-aqueous electrolyte solution, and may include lithium difluorophosphate (LiPO₂F₂) or LiBF₄.

Among these auxiliary additives, when at least one selected from vinylene carbonate, vinylethylene carbonate, 1,3-propane sultone, fluoroethylene carbonate, ethylene sulfate, succinonitrile and lithium difluoro(oxalato)borate, specifically, at least one selected from vinylene carbonate and ethylene sulfate is included, a more robust SEI film may be formed on the surface of the negative electrode during the initial activation process of the secondary battery.

Two or more compounds may be mixed and used as the auxiliary additives, and the total content of the auxiliary additives may be included in an amount of 50 wt% or less, specifically 0.05 to 20 wt%, and more specifically 0.05 to 10 wt%, based on the total weight of the non-aqueous electrolyte solution. When the total content of the additives satisfies the above range, the low-temperature output characteristics of the battery may be improved and high-temperature storage characteristics and high-temperature lifespan characteristics may be more effectively improved. The occurrence of battery side reactions caused by the remaining additives after the reaction may be also prevented.

### Lithium secondary battery

Also, the present disclosure provides a lithium secondary battery comprising the above-mentioned non-aqueous electrolyte.

Specifically, the lithium secondary battery according to the present disclosure may comprise a positive electrode, a negative electrode facing the positive electrode, a separator interposed between the positive electrode and the negative electrode, and the above-mentioned non-aqueous electrolyte.

After an electrode assembly, in which the positive electrode, the negative electrode facing the positive electrode, and separator interposed between the positive electrode and the negative electrode are included, is accommodated in a battery case, the lithium secondary battery may be prepared by injecting the non-aqueous electrolyte thereto.

### (1) Positive Electrode

The positive may include a positive electrode active material.

The positive electrode active material may include lithium iron phosphate particles. In the case of the lithium iron phosphate particles, there is a problem in that Fe is eluted due to an exposure to lithium salt by-products (HF, PF5, etc.), and the eluted Fe may move to the negative electrode through the non-aqueous electrolyte and destroy the SEI film formed on the surface of the negative electrode, thereby accelerating electrolyte side reactions, or generating active oxygen from the positive electrode active material, which may accelerate the decomposition of the organic solvent. However, when the non-aqueous electrolyte according to the present disclosure is used with a positive electrode containing lithium iron phosphate particles, not only can the elution of Fe be prevented by forming a robust SEI film on the surface of the positive electrode, but electrolyte side reactions can also be significantly prevented as the above-described effect of scavenging radicals removes active oxygen. This makes it possible to achieve a lithium secondary battery with significantly improved output characteristics, lifespan characteristics, and high-temperature storage performance.

The lithium iron phosphate particles may include a compound represented by Formula A below.

[Formula A] Li₁₊ₐFe₁₋ₛMₛ(PO_{4-b})X_{b}

In Formula A, M is one or more element selected from Co, Ni, Al, Mg, Ti and V, and X is F, S, or N wherein 0≤s≤0.5; -0.5≤a≤+0.5; and 0≤b≤0.1.

The Formula A may be specifically denoted as LiFePO₄ (a=0, s=0, and b=0).

The lithium iron phosphate particles may consist of primary particles or secondary particles in which two or more primary particles are aggregated, or may be a mixture of the primary particles and the secondary particles in which two or more primary particles are aggregated.

The average particle diameter (D₅₀) of the primary particles may be in the range of 0.2 µm to 3.0 µm, specifically 0.2 µm to 2.0 µm, and more specifically 0.3 µm to 1.5 µm, and the average particle diameter (D₅₀) of the secondary particles may be in the range of 7 µm to 25 µm, and specifically 10 µm to 20 µm.

The positive electrode active material may further include a carbon coating layer located on the lithium iron phosphate particles. The carbon coating layer may be introduced for the purpose of protecting the lithium iron phosphate particles, improving an electrical conductivity, etc.

Meanwhile, the positive electrode active material is a compound capable of reversible intercalation and de-intercalation of lithium, and specifically may include a lithium transition metal composite oxide including lithium and at least one transition metal consisting of nickel, cobalt, manganese, and aluminum, and preferably may include a lithium transition metal composite oxide including lithium and a transition metal including nickel, cobalt, and manganese.

For example, the lithium transition metal composite oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-z}Ni_{z}O₄ (where 0<Z<2), etc.), lithium-nickel-cobalt-based oxide (e.g., LiNi_{1-Y1}Co_{Y1}O₂(where 0<Y1<1), etc.), lithium-manganese-cobalt-based oxide (e.g., LiCo_{1-Y2}Mn_{Y2}O₂ (where 0<Y2<1), LiMn_{2-z1}Co_{z1}O₄(where 0<Z1<2), etc.), lithium-nickel-manganese-cobalt-based oxide (e.g., Li(NiₚCo_{q}Mnᵣ₁)O₂ (where 0<p<1, 0<q<1, 0<r1<1, and p+q+r1=1) or Li(Niₚ₁Co_{q1}Mnᵣ₂) O₄(where 0<p1<2, 0<q1<2, 0<r2<2, and p1+q1+r2=2), etc.), or lithium-nickel-cobalt-transition metal (M) oxide (e.g., Li(Niₚ₂Co_{q2}Mnᵣ₃Mₛ₂)O₂ (where M is selected from Al, Fe, V, Cr, Ti, Ta, Mg and Mo, and p2, q2, r3 and s2 are atomic fractions of each independent elements, wherein 0 < p2 < 1, 0 < q2 < 1, 0 < r3 < 1, 0 < s2 < 1, and p2+q2+r3+s2=1), etc.) and any one thereof or a compound of two or more thereof may be included. Among these materials, in terms of being able to improve the capacity characteristics and stability of the battery, the lithium transition metal composite oxide may include LiCoO₂, LiMnO₂, LiNiO₂, lithium nickel manganese cobalt oxide (e.g.,, Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂ or Li(Ni_{0.8}Mn_{0.1}Co_{0.1})O₂, etc.), or lithium nickel cobalt aluminum oxide (e.g., Li(Ni_{0.8}Co_{0.15}Al_{0.05})O₂ , etc.). In consideration of the significant effect of improvement resulting from the control of the types and content ratios of the components constituting the lithium transition metal composite oxide, the lithium transition metal composite oxide may be Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂ or Li(Ni_{0.8}Mn_{0.1}Co_{0.1})O₂ or the like, and any one thereof or a mixture of two or more thereof may be used.

More specifically, the positive electrode active material may be a lithium transition metal composite oxide, and may contain 60 mol% or more of nickel, based on the total number of the moles of transition metals included in the lithium transition metal composite oxide. Specifically, the positive electrode active material is a lithium transition metal composite oxide, and the transition metal includes nickel, and at least one selected from manganese, cobalt, andaluminum, and may include nickel in an amount of 60 mol% or more, specifically 60 mol% to 90 mol%, based on the total number of the moles of the transition metal. When the lithium transition metal composite oxide using such a high nickel content is used together with the above-described non-aqueous electrolyte solution, it is preferable in terms of being able to reduce by-products in the gas phase generated by the structural collapse.

In addition, the positive electrode active material may include a lithium composite transition metal oxide represented by the following Formula B:

[Formula B] Li₁₊ₓ(NiₐCo_{b}Mn_{c}M_{d})O₂

In Formula B, M is at least one selected from W, Cu, Fe, V, Cr, Ti, Zr, Zn, Al, In, Ta, Y, La, Sr, Ga, Sc, Gd, Sm, Ca, Ce, Nb, Mg, B and Mo, and 1+x, a, b, c and d are each independent atomic fractions of elements, wherein 0≤x≤0.2, 0.50≤a<1, 0<b≤0.25, 0<c≤0.25, 0≤d≤0.1, a+b+c+d=1.

Preferably, a, b, c and d may be 0.70≤a≤0.95, 0.025≤b≤0.20, 0.025≤c≤0.20, and 0≤d≤0.05, respectively.

In addition, each of a, b, c and d may be 0.80≤a≤0.95, 0.025≤b≤0.15, 0.025≤c≤0.15, and 0≤d≤0.05.

In addition, each of a, b, c and d may be 0.85≤a≤0.90, 0.05≤b≤0.10, 0.05≤c≤0.10, and 0≤d≤0.03.

The positive electrode may include a positive electrode current collector and a positive electrode active material layer disposed on at least one surface of the positive electrode current collector, wherein the positive electrode active material layer may include the above-mentioned positive electrode active material.

The positive electrode current collector may have a thickness of 3 µm to 500 µm.

The positive electrode current collector may have microscopic irregularities formed on the surface thereof to enhance the adhesion of a positive electrode active material. For example, the positive electrode current collector may be used in various shapes such as a film, a sheet, a foil, a net, a porous body, a foam body, and a non-woven fabric body.

The positive electrode active material layer may be disposed on at least one surface of the positive electrode current collector. Specifically, the positive electrode active material layer may be disposed on one surface or both surfaces of the positive electrode current collector.

The positive electrode active material may be included in an amount of 80 wt% to 99 wt% in the positive electrode active material layer in consideration of exhibiting the sufficient capacity of the positive electrode active material.

The positive electrode active material layer may further include a binder and/or a conductive agent together with the positive electrode active material as described above.

The binder is a component that assists in the binding between the active material and the conductive agent and in the binding with the current collector, and specifically may include at least one selected from polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene terpolymer (EPDM), a sulfonated EPDM, a styrene-butadiene rubber, and a fluoro rubber, and preferably include polyvinylidenefluoride.

The binder may be included in an amount of 1 wt% to 20 wt%, and preferably, 1.2 wt% to 10 wt% in the positive electrode active material layer in terms of securing a sufficient binding force between components such as positive electrode active materials.

The conductive agent may be used to assist and improve conductivity in the secondary battery, and is not particularly limited as long as it has conductivity without causing chemical changes. Specifically, the positive electrode conductive agent may include at least one selected from graphite such as natural graphite or artificial graphite; carbon black such as carbon black, acetylene black, Ketjen black, channel black, furnace black, lamp black, and thermal black; conductive fibers such as carbon fibers and metal fibers; conductive tubes such as carbon nanotubes; fluorocarbons; metal powders such as aluminum and nickel powder; conductive whiskers such as zinc oxide and potassium titanate; conductive metal oxides such as titanium oxide; and polyphenylene derivatives, and preferably may include carbon nanotubes for the purpose of improving conductivity.

The conductive agent may be included in an amount of 1 wt% to 20 wt%, and preferably 1.2 wt% to 10 wt%, in the positive electrode active material layer in terms of sufficiently securing electrical conductivity.

The thickness of the positive electrode active material layer may be 100 µm to 400 µm, and preferably 150 µm to 300 µm.

The positive electrode active material layer may have a loading amount of 2mAh/cm² to 5mAh/cm², and preferably 3.5mAh/cm² to 4.0mAh/cm².

The positive electrode may be prepared by coating the positive electrode current collector with a positive electrode slurry including a positive electrode active material, and optionally a binder, a conductive agent, and a solvent for forming a positive electrode slurry, followed by drying and roll-pressing.

The solvent for forming a positive electrode slurry may include an organic solvent such as NMP(N-methyl-2-pyrrolidone). The solid content of the positive electrode slurry may be 40 wt% to 90 wt%, and specifically 50 wt% to 80 wt%.

### (2) Negative Electrode

The negative electrode may face the positive electrode.

The negative electrode may include a negative electrode active material.

The negative electrode may include a negative electrode current collector and a negative electrode active material layer disposed on at least one surface of the negative electrode current collector, wherein the negative electrode active material may be included in the negative electrode active material layer.

The negative electrode current collector is not particularly limited so long as it has a high conductivity without causing adverse chemical changes in the battery. Specifically, the negative electrode current collector may include at least one selected from copper, stainless steel, aluminum, nickel, titanium, sintered carbon, copper or stainless steel that is surface-treated with one of carbon, nickel, titanium, silver, or the like, and an aluminum-cadmium alloy.

The negative electrode current collector may have a thickness of 3 µm to 500 µm.

The negative electrode current collector may have microscopic irregularities formed on the surface thereof to enhance the adhesion of the negative electrode active material. For example, the negative electrode current collector may be used in various shapes such as a film, a sheet, a foil, a net, a porous body, a foam body, and a non-woven fabric body.

The negative electrode active material layer is disposed on at least one surface of the negative electrode current collector. Specifically, the negative electrode active material layer may be disposed on one surface or both surfaces of the negative electrode current collector.

The negative electrode active material layer may include the negative electrode active material.

As a material capable of reversibly intercalating/deintercalating lithium ions, the negative electrode active material may include at least one selected from a carbon-based active material, a metal/metalloid-based active material, and a lithium metal, and specifically may include at least one selected from the carbon-based active material and metal/metalloid-based active material.

The carbon-based active material may include at least one selected from graphite, hard carbon, soft carbon, carbon black, graphene, and fibrous carbon, and may preferably include graphite. The graphite may include at least one selected from artificial graphite and natural graphite.

The average particle diameter (D₅₀) of the carbon-based active material may be 10 µm to 30 µm, and preferably 15 µm to 25 µm in view of ensuring the structural stability during charging and discharging and reducing side reactions with an electrolyte solution.

Specifically, the metal/metalloid-based active material may include at least one metal/metalloid selected from Cu, Ni, Na, K, Rb, Cs, Fr, Be, Mg, Ca, Sr, Si, Sb, Pb, In, Zn, Ba, Ra, Ge, Al, V, Ti, and Sn; an alloy of lithium and one metal/metalloid selected from Cu, Ni, Na, K, Rb, Cs, Fr, Be, Mg, Ca, Sr, Si, Sb, Pb, In, Zn, Ba, Ra, Ge, Al, V, Ti, and Sn; an oxide of at least one metal/metalloid selected from Cu, Ni, Na, K, Rb, Cs, Fr, Be, Mg, Ca, Sr, Si, Sb, Pb, In, Zn, Ba, Ra, Ge, Al, V, Ti, and Sn; a lithium titanium oxide (LTO); lithium vanadium oxide; etc.

More specifically, the metal/metalloid-based active material may include a silicon-based active material.

The silicon-based active material may include a compound represented by SiOₓ(0≤x<2).

Since SiO₂ may not react with lithium ions and thus not store lithium, it is preferable that x is within the above range. More preferably, the silicon-based active material may be SiO.

The average particle diameter (D₅₀) of the silicon-based active material may be 1 µm to 30 µm, and preferably 2 µm to 15 µm in view of ensuring the structural stability during charging and discharging and reducing side reactions with an electrolyte solution.

The negative electrode active material may be included in an amount of 60 wt% to 99 wt%, and preferably 75 wt% to 95 wt% in the negative electrode active material layer.

The negative electrode active material layer may further include a binder and/or a conductive material together with the negative electrode active material.

The binder is used to improve battery performance by improving adhesion between the negative electrode active material layer and the negative electrode current collector, and for example, may include at least one selected from a polyvinylidene fluoride-hexafluoropropylene copolymer (PVDF-co-HFP), polyvinylidenefluoride(PVDF), polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene butadiene rubber (SBR), fluororubber, and a material in which hydrogen is substituted with Li, Na or Ca, and may also include various copolymers thereof.

The binder may be included in the negative electrode active material layer in an amount of 0.5 wt% to 10 wt%, and preferably 1 wt% to 5 wt%.

The conductive material is not particularly limited as long as it has conductivity without causing chemical changes in the battery, for example, graphite such as natural graphite or artificial graphite; carbon black such as acetylene black, Ketjen black, channel black, furnace black, lamp black, and thermal black; conductive fibers such as carbon fibers and metal fibers; conductive tubes such as carbon nanotubes; fluorocarbons; metal powders such as aluminum and nickel powder; conductive whiskers such as zinc oxide and potassium titanate; conductive metal oxides such as titanium oxide; and conductive materials such as polyphenylene derivatives may be used.

The conductive material may be included in the negative electrode active material layer in an amount of 0.5 wt% to 10 wt%.

The thickness of the negative electrode active material layer may be 100 µm to 300 µm, and preferably 150 µm to 200 µm.

The negative electrode active material layer may have a loading amount of 2mAh/cm² to 5mAh/cm², and preferably 3.5mAh/cm² to 4.0mAh/cm².

The negative electrode may be manufactured by coating a negative electrode slurry including a negative electrode active material, a binder, a conductive material and/or a solvent for forming the negative electrode slurry on at least one surface of the negative electrode current collector, followed by drying and rolling.

The solvent for forming a negative electrode slurry may include, for example, at least one selected from distilled water, N-methyl-2-pyrrolidone (NMP), ethanol, methanol, and isopropyl alcohol, and preferably distilled water, for the purpose of facilitating the dispersion of the negative electrode active material, the binder and/or the conductive material. The solid content of the negative electrode slurry may be 30 wt% to 80 wt%, and specifically 40 wt% to 70 wt%.

### (3) Separator

The separator is interposed between the positive electrode and the negative electrode.

As the separator, a common porous polymer film typically used as a separator, for example, a porous polymer film prepared with a polyolefin-based polymer, such as an ethylene homocopolymer, a propylene homocopolymer, an ethylene/butene copolymer, an ethylene/hexene copolymer, and an ethylene/methacrylate copolymer may be used alone, or in a laminated form thereof. Alternatively, a typical porous non-woven fabric, for example, a non-woven fabric formed of a glass fiber having a high melting point or polyethylene terephthalate fiber may be used, but the present disclosure is not limited thereto. Also, a coated separator including a ceramic component or a polymer material may be used to secure heat resistance or mechanical strength, and may be selectively used in a single-layered or a multi-layered structure.

The lithium secondary battery according to the present disclosure as described above may be suitably used in portable devices, such as mobile phones, notebook computers, and digital cameras, and electric cars such as hybrid electric vehicles (HEVs).

Thus, according to another embodiment of the present disclosure, a battery module including the lithium secondary battery as a unit cell and a battery pack including the battery module are provided.

The battery module or the battery pack may be used as the power source for one or more medium and large sized devices in a power tool; electric cars including an electric vehicle (EV), a hybrid electric vehicle, and a plug-in hybrid electric vehicle (PHEV); or a power storage system.

A shape of the lithium secondary battery of the present disclosure is not particularly limited, but a cylindrical type using a can, a prismatic type, a pouch type, or a coin type may be used.

The lithium secondary battery according to the present disclosure may not only be used in a battery cell that is used as a power source of a small device, but may also be used as a unit cell in a medium and large sized battery module including a plurality of battery cells.

Hereinafter, the present disclosure will be described in more detail according to examples.

However, the invention may be embodied in many different forms and should not be construed as being limited to the embodiments set forth herein. Rather, these example embodiments are provided so that this description will fully convey the scope of the present disclosure to those skilled in the art.

Hereinafter, the present disclosure will be described in more detail according to examples.

### Examples

### Example 1

### (Preparation of Non-aqueous Electrolyte)

An organic solvent, in which ethylene carbonate (EC), ethyl methyl carbonate (EMC), and dimethyl carbonate (DMC) were mixed in a volume ratio of 30:55:15 was prepared.

LiPF₆ was dissolved in the organic solvent such that a concentration of the LiPF₆ was 1.0 M.

In addition, a non-aqueous electrolyte was prepared by adding the compound represented by Formula 1-1, vinylene carbonate, and ethylene sulfate to the organic solvent in which the lithium salt was dissolved.

The compound represented by Formula 1-1 was included in an amount of 0.5 wt% in the non-aqueous electrolyte, and ethylene sulfate was included in an amount of 1 wt% in the non-aqueous electrolyte.

### (Preparation of Secondary Battery)

LiFePO₄ (D₅₀: 1*µ*m) as the positive electrode active material: a carbon nanotube as the conductive agent: polyvinylidenefluoride as the binder were added in a weight ratio of 96:1:3 to N-methyl-2-pyrrolidone (NMP), which was a solvent, to prepare a positive electrode slurry (solid content: 65 wt%). A 15 µm a positive electrode current collector (Al thin film) was coated with the positive electrode slurry in a loading amount of 3.7mAh/cm², dried and then roll-pressed to prepare a positive electrode.

Graphite as the negative electrode active material, SBR-CMC as the binder and carbon black as the conductive agent, were added to water, which is a solvent, at a weight ratio of 95.5:4.0:0.5 to prepare a negative electrode slurry (solid content: 50 wt%). A 8 µm thick negative electrode current collector (Cu thin film) was coated with the negative electrode slurry in a loading amount of 3.9mAh/cm², dried, and roll-pressed to prepare a negative electrode (thickness of the negative electrode active material: 160*µ*m).

An electrode assembly was prepared by sequentially stacking the positive electrode, polyolefin-based porous separator, and negative electrode.

After the electrode assembly was put in a battery case, the above-prepared non-aqueous electrolyte was injected to prepare a lithium secondary battery.

### Example 2

A non-aqueous electrolyte and a lithium secondary battery were prepared in the same manner as in Example 1 except that 0.5 wt% of the compound represented by Formula 1-2 was added to the non-aqueous electrolyte instead of the compound represented by Formula 1-1.

### Example 3

A non-aqueous electrolyte and a lithium secondary battery were prepared in the same manner as in Example 1 except that 0.5 wt% of the compound represented by Formula 1-3 was added to the non-aqueous electrolyte instead of the compound represented by Formula 1-1.

### Example 4

A non-aqueous electrolyte and a lithium secondary battery were prepared in the same manner as in Example 1 except that 0.5 wt% of the compound represented by Formula 2-1 was added to the non-aqueous electrolyte instead of the compound represented by Formula 1-1.

### Example 5

A non-aqueous electrolyte and a lithium secondary battery were prepared in the same manner as in Example 1 except that 0.5 wt% of the compound represented by Formula 2-2 was added to the non-aqueous electrolyte instead of the compound represented by Formula 1-1.

### Example 6

A non-aqueous electrolyte and a lithium secondary battery were prepared in the same manner as in Example 1 except that 0.5 wt% of the compound represented by Formula 2-3 was added to the non-aqueous electrolyte instead of the compound represented by Formula 1-1.

### Comparative Example 1

A non-aqueous electrolyte and a lithium secondary battery were prepared in the same manner as in Example 1 except that the compound represented by Formula 1-1 was not added.

### Comparative Example 2

A non-aqueous electrolyte and a lithium secondary battery were prepared in the same manner as in Example 1 except that 0.5 wt% of the compound (a=20) represented by Formula 3 was added to the non-aqueous electrolyte instead of the compound represented by Formula 1-1.

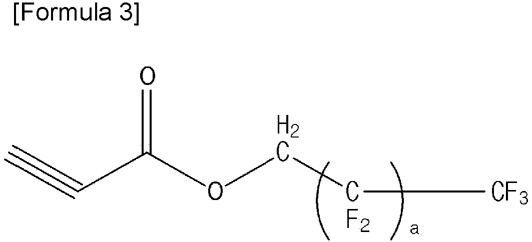

### Comparative Example 3

A non-aqueous electrolyte and a lithium secondary battery were prepared in the same manner as in Example 2 except that 0.5 wt% of the compound (b=20) represented by Formula 4 was added to the non-aqueous electrolyte instead of the compound represented by Formula 2-1.

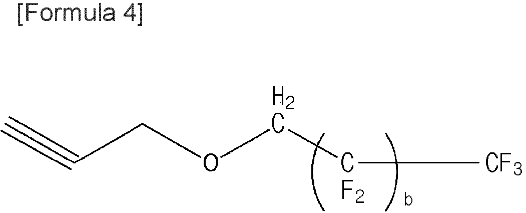

### Comparative Example 4

A non-aqueous electrolyte and a lithium secondary battery were prepared in the same manner as in Example 1 except that 0.5 wt% of the compound (c=2) represented by Formula 5 was added to the non-aqueous electrolyte instead of the compound represented by Formula 1-1.

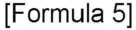

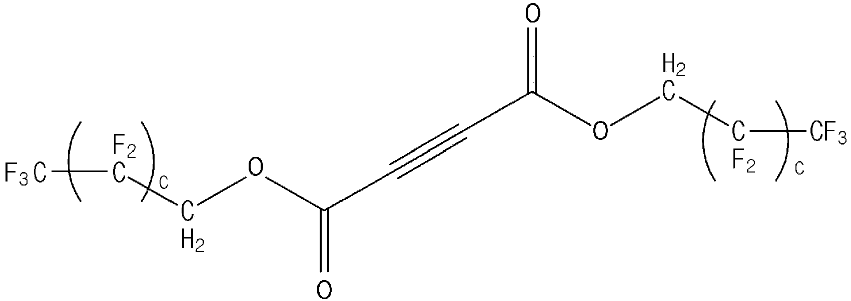

### Comparative Example 5

A non-aqueous electrolyte and a lithium secondary battery were prepared in the same manner as in Example 1 except that 0.5 wt% of the compound represented by Formula 6 was added to the non-aqueous electrolyte instead of the compound represented by Formula 1-1.

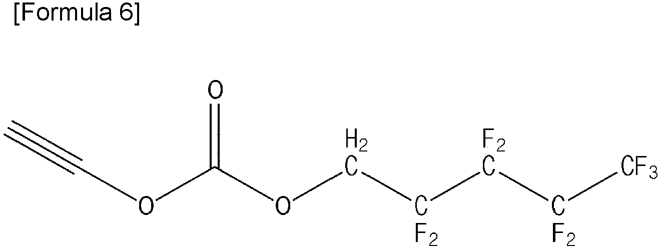

### Experimental Examples

### Experimental Example 1: Evaluation of low-temperature cycle capacity retention rate

The lithium secondary batteries prepared in Examples 1 to 6 and Comparative Examples 1 to 5 were charged to 3.65V, 0.05C at 25°C using an electrochemical charger/discharger under a CC/CV, 1/3C conditions, and were then discharged to 2.5V under CC, 1/3C conditions to perform the initial charging and discharging.

Thereafter, they were charged to 3.65V, 0.05C at -10°C using an electrochemical charger/discharger under a CC/CV, 0.33C conditions, and were then discharged to 2.5V under CC, 0.33C conditions, which was set as one cycle. After 100 cycles of charging/discharging were performed, the capacity retention rate was measured, and the results are shown in Table 1 below. 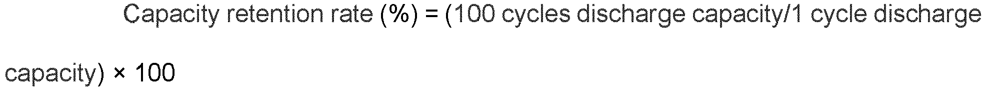 Capacity retention rate (%) = (100 cycles discharge capacity/1 cycle discharge capacity) × 100

### Experimental Example 2: Evaluation of low-temperature cycle resistance increase rate

100 cycles of charging/discharging were performed on the above-prepared lithium secondary batteries prepared in Examples 1 to 6 and Comparative Examples 1 to 5 in the same manner as in Experimental Example 1.

After one cycle of charging and discharging, the discharge capacity after one cycle was measured using an electrochemical charger/discharger, the SOC was adjusted to SOC 50%, and a pulse of 2.5C was then applied for 10 seconds. The initial resistance was calculated through a difference between the voltage before the pulse application and the voltage after the pulse application.

After 100 cycles of charging and discharging, the resistance after 100 cycles was calculated in the same manner as above. The resistance increase rate was calculated, and the results are shown in Table 1 below. 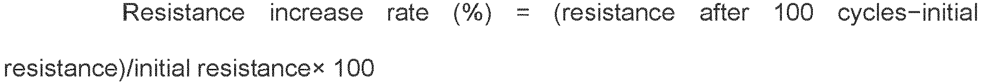 Resistance increase rate (%) = (resistance after 100 cycles-initial resistance)/initial resistance× 100

**[Table 1]**

| | Experimental Example 1 | | Experimental Example 2 | |
|---|---|---|---|---|
| | Initial capacity (mAh) | Capacity retention rate (%) | Initial resistance (mOhm) | Resistance increase rate (%) |
| Example 1 | 696.4 | 99.68 | 137.2 | 3.32 |
| Example 2 | 690.8 | 99.26 | 139.2 | 5.69 |
| Example 3 | 693.5 | 99.42 | 138.4 | 5.72 |
| Example 4 | 695.5 | 98.98 | 139.9 | 4.39 |
| Example 5 | 691.2 | 99.11 | 138.8 | 6.32 |
| Example 6 | 692.2 | 99.23 | 137.6 | 3.74 |
| Comparative Example 1 | 680.4 | 92.80 | 142.3 | 8.43 |
| Comparative Example 2 | 670.2 | 92.25 | 147.2 | 10.43 |
| Comparative Example 3 | 668.4 | 91.92 | 143.3 | 11.95 |
| Comparative Example 4 | 679.4 | 89.32 | 145.6 | 10.82 |
| Comparative Example 5 | 671.8 | 93.2 | 141.9 | 12.87 |

Referring to Table 1, it can be confirmed that the lithium secondary batteries of Examples 1 to 6 according to the present disclosure have excellent low-temperature lifespan performance and low-temperature output performance when compared to the lithium secondary batteries of Comparative Examples 1 to 5.

## Claims

1. A non-aqueous electrolyte comprising:
a lithium salt, an organic solvent, and an additive,
**characterized in that**
the additive includes at least one selected from compounds represented by Formula 1 and Formula 2: 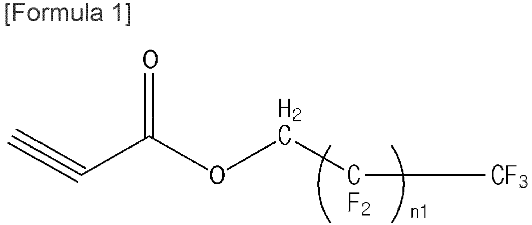 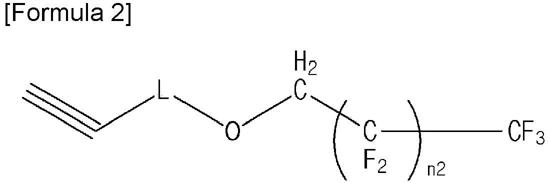
wherein, in Formula 1, n1 is an integer from 0 to 18,
in Formula 2, n2 is an integer from 0 to 18, and L is an alkylene group having 1 to 10 carbon atoms.

2. The non-aqueous electrolyte of claim 1, wherein, in Formula 1, n1 is an integer from 0 to 10.

3. The non-aqueous electrolyte of claim 1, wherein, in Formula 2, n2 is an integer from 0 to 10.

4. The non-aqueous electrolyte of claim 1, wherein, in Formula 2, L is an alkylene group having 1 to 3 carbon atoms.

5. The non-aqueous electrolyte of claim 1, wherein the compound represented by Formula 1 above includes at least one selected from compounds represented by Formula 1-1, Formula 1-2 and Formula 1-3 below:

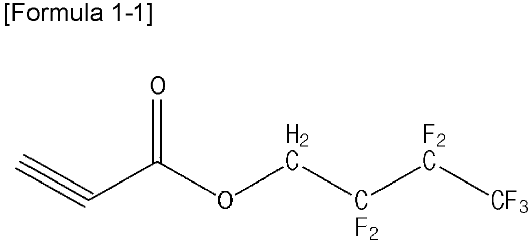

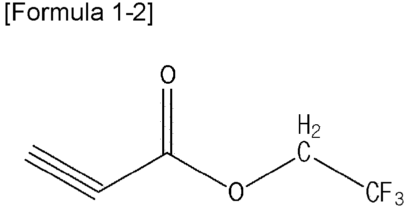

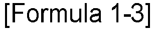

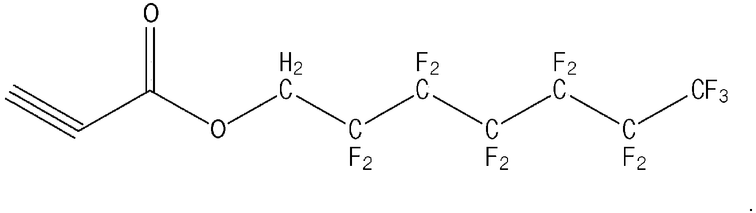

6. The non-aqueous electrolyte of claim 1, wherein the compound represented by Formula 2 above includes at least one selected from compounds represented by Formula 2-1, Formula 2-2, and Formula 2-3 below:

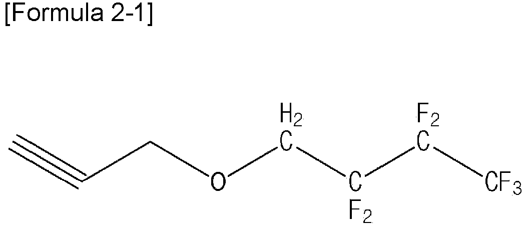

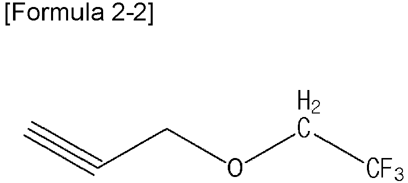

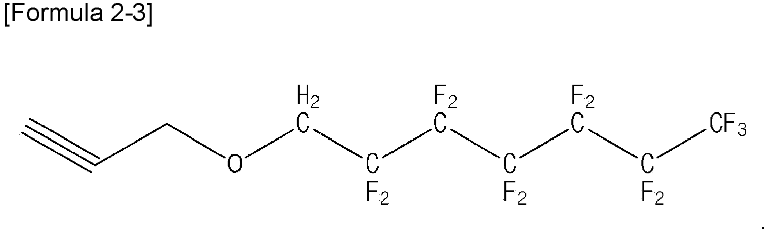

7. The non-aqueous electrolyte of claim 1, wherein the additive is included in an amount of 0.01 wt% to 10 wt% in the non-aqueous electrolyte.

8. The non-aqueous electrolyte of claim 1, further comprising at least one auxiliary additive selected from a halogen-substituted or unsubstituted carbonate-based compound, a sultone-based compound, a sulfate-based compound, a phosphate-based or phosphite-based compound, a borate-based compound, a nitrile-based compound, an amine-based compound, a silane-based compound, and a lithium salt-based compound.

9. The non-aqueous electrolyte of claim 1, wherein the organic solvent includes a cyclic carbonate-based organic solvent and a linear carbonate-based organic solvent.

10. The non-aqueous electrolyte of claim 9, wherein the cyclic carbonate-based organic solvent includes ethylene carbonate, and the linear carbonate-based organic solvent includes dimethyl carbonate.

11. A lithium secondary battery comprising a positive electrode; a negative electrode facing the positive electrode; a separator interposed between the positive electrode and the negative electrode; and the non-aqueous electrolyte of claim 1.

12. The lithium secondary battery of claim 11, wherein the positive electrode includes a positive electrode active material, and the positive electrode active material includes a lithium iron phosphate particle.

13. The lithium secondary battery of claim 12, wherein the lithium iron phosphate particle includes a compound represented by Formula A:
[Formula A] Li₁₊ₐFe₁₋ₛMₛ(PO_{4-b})X_{b}
wherein, in Formula A, M is one or more element selected from Co, Ni, Al, Mg, Ti and V, and X is F, S, or N, wherein 0≤s≤0.5; -0.5≤a≤+0.5; and 0≤b≤0.1.

14. The lithium secondary battery of claim 11, wherein the negative electrode includes a negative electrode active material, and the negative electrode active material includes a carbon-based active material.

## Patentansprüche

1. Nichtwässriger Elektrolyt, umfassend:
ein Lithiumsalz, ein organisches Lösungsmittel und ein Additiv,
**dadurch gekennzeichnet, dass**
das Additiv mindestens eine aus den durch Formel 1 und Formel 2 dargestellten Verbindungen ausgewählte Verbindung einschließt: 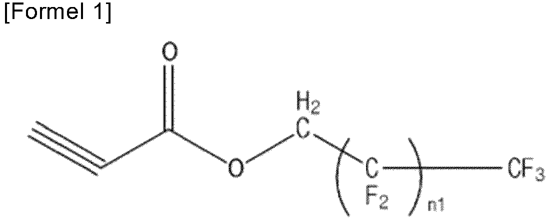 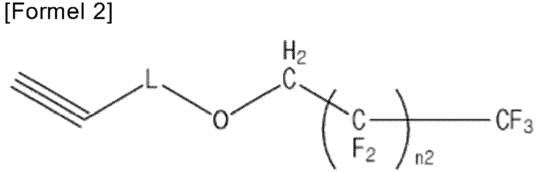
wobei in Formel 1, n1 eine ganze Zahl von 0 bis 18 ist,
in Formel 2, n2 eine ganze Zahl von 0 bis 18 ist und L eine Alkylengruppe mit 1 bis 10 Kohlenstoffatomen ist.

2. Nichtwässriger Elektrolyt nach Anspruch 1, wobei, in Formel 1, n1 eine ganze Zahl von 0 bis 10 ist.

3. Nichtwässriger Elektrolyt nach Anspruch 1, wobei, in Formel 2, n2 eine ganze Zahl von 0 bis 10 ist.

4. Nichtwässriger Elektrolyt nach Anspruch 1, wobei, in Formel 2, L eine Alkylengruppe mit 1 bis 3 Kohlenstoffatomen ist.

5. Nichtwässriger Elektrolyt nach Anspruch 1, wobei die oben durch Formel 1 dargestellte Verbindung mindestens eine aus den nachstehend durch Formel 1-1, Formel 1-2 und Formel 1-3 dargestellten Verbindungen ausgewählte Verbindung einschließt:

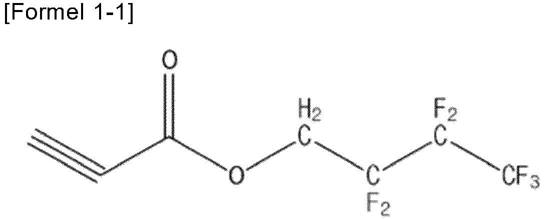

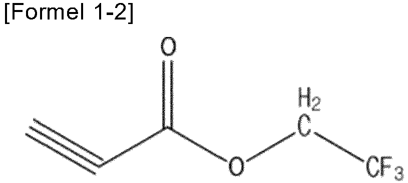

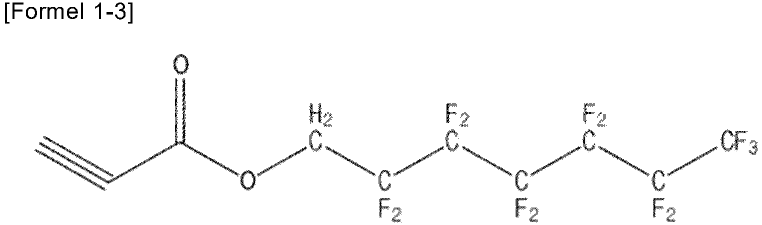

6. Nichtwässriger Elektrolyt nach Anspruch 1, wobei die oben durch Formel 2 dargestellte Verbindung mindestens eine aus den nachstehend durch Formel 2-1, Formel 2-2 und Formel 2-3 dargestellten Verbindungen ausgewählte Verbindung umfasst:

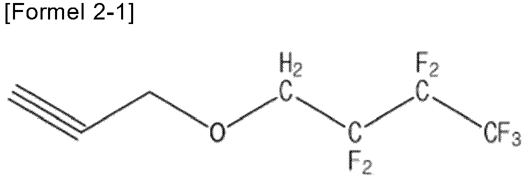

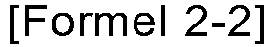

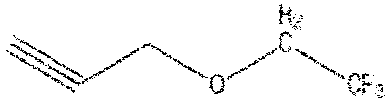

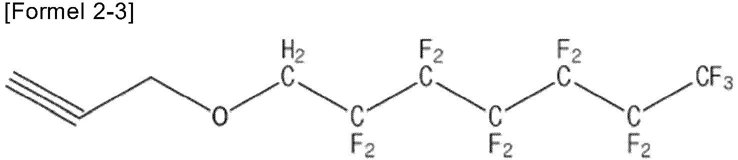

7. Nichtwässriger Elektrolyt nach Anspruch 1, wobei der nichtwässrige Elektrolyt das Additiv in einer Menge von 0,01 Gew.-% bis 10 Gew.-% einschließt.

8. Nichtwässriger Elektrolyt nach Anspruch 1, weiter umfassend mindestens ein Hilfsadditiv, ausgewählt aus einer halogensubstituierten oder unsubstituierten Verbindung auf Carbonatbasis, einer Verbindung auf Sultonbasis, einer Verbindung auf Sulfatbasis, einer Verbindung auf Phosphat- oder Phosphitbasis, einer Verbindung auf Boratbasis, einer Verbindung auf Nitrilbasis, einer Verbindung auf Aminbasis, einer Verbindung auf Silanbasis und einer Verbindung auf Lithiumsalzbasis.

9. Nichtwässriger Elektrolyt nach Anspruch 1, wobei das organische Lösungsmittel ein organisches Lösungsmittel auf Basis eines cyclischen Carbonats und ein organisches Lösungsmittel auf Basis eines linearen Carbonats einschließt.

10. Nichtwässriger Elektrolyt nach Anspruch 9, wobei das organische Lösungsmittel auf Basis eines cyclischen Carbonats Ethylencarbonat einschließt und das organische Lösungsmittel auf Basis eines linearen Carbonats Dimethylcarbonat einschließt.

11. Lithiumsekundärbatterie umfassend eine positive Elektrode; eine der positiven Elektrode gegenüberliegende negative Elektrode; einen zwischen der positiven Elektrode und der negativen Elektrode angeordneten Separator; und den nichtwässrigen Elektrolyten nach Anspruch 1.

12. Lithiumsekundärbatterie nach Anspruch 11, wobei die positive Elektrode ein Positivelektrodenaktivmaterial einschließt, und das Positivelektrodenaktivmaterial ein Lithiumeisenphosphat-Partikel einschließt.

13. Lithiumsekundärbatterie nach Anspruch 12, wobei das Lithiumeisenphosphat-Partikel eine durch Formel A dargestellte Verbindung einschließt:
[Formel A] Li₁₊ₐFe₁₋ₛMₛ(PO_{4-b})X_{b}
wobei, in Formel A, M ein oder mehrere aus Co, Ni, Al, Mg, Ti und V ausgewählte Elemente sind und X F, S oder N ist, wobei 0≤s≤0,5; -0,5≤a≤+0,5 und 0≤b≤0,1.

14. Lithiumsekundärbatterie nach Anspruch 11, wobei die negative Elektrode ein Negativelektrodenaktivmaterial einschließt, und das Negativelektrodenaktivmaterial ein Aktivmaterial auf Kohlenstoffbasis einschließt.

## Revendications

1. Électrolyte non aqueux comprenant :
un sel de lithium, un solvant organique et un additif,
**caractérisé en ce que**
l'additif comprend au moins un composé choisi parmi les composés représentés par la Formule 1 et la Formule 2 : 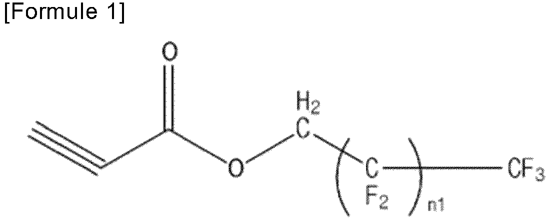 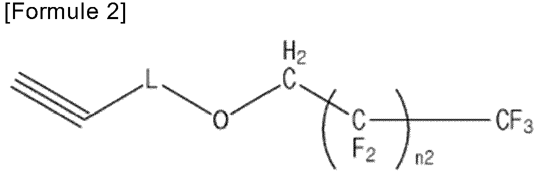
dans la Formule 1, n1 est un nombre entier de 0 à 18,
dans la Formule 2, n2 est un nombre entier de 0 à 18, et L est un groupe alkylène présentant 1 à 10 atomes de carbone.

2. Électrolyte non aqueux selon la revendication 1, dans lequel, dans la Formule 1, n1 est un nombre entier de 0 à 10.

3. Électrolyte non aqueux selon la revendication 1, dans lequel, dans la Formule 2, n2 est un nombre entier de 0 à 10.

4. Électrolyte non aqueux selon la revendication 1, dans lequel, dans la Formule 2, L est un groupe alkylène présentant 1 à 3 atomes de carbone.

5. Électrolyte non aqueux selon la revendication 1, dans lequel le composé représenté par la Formule 1 ci-dessus comprend au moins un composé choisi parmi les composés représentés par la Formule 1-1, la Formule 1-2 et la Formule 1-3 ci-dessous :

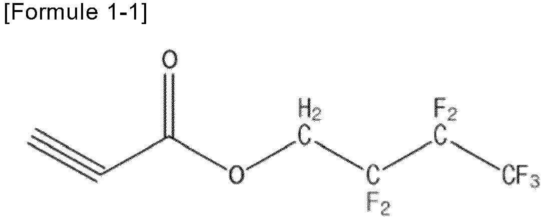

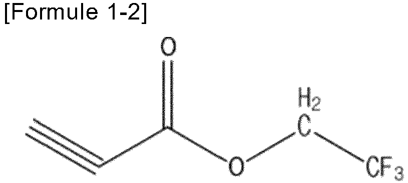

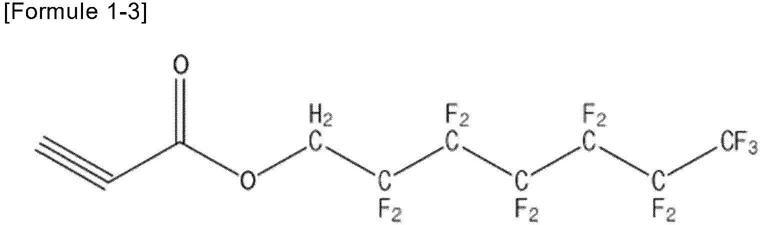

6. Électrolyte non aqueux selon la revendication 1, dans lequel le composé représenté par la Formule 2 ci-dessus comprend au moins un composé choisi parmi les composés représentés par la Formule 2-1, la Formule 2-2 et la Formule 2-3 ci-dessous :

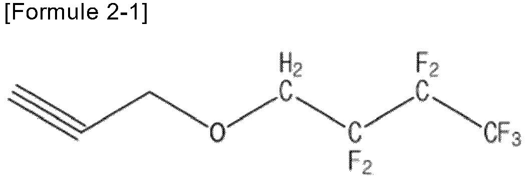

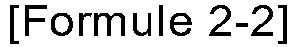

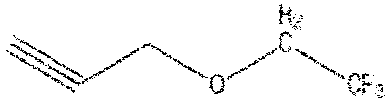

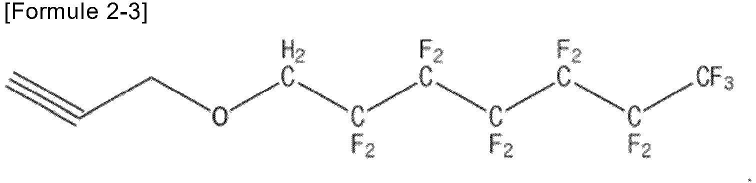

7. Électrolyte non aqueux selon la revendication 1, dans lequel l'additif est compris en une teneur de 0,01 % en poids à 10 % en poids dans l'électrolyte non aqueux.

8. Électrolyte non aqueux selon la revendication 1, comprenant en outre au moins un additif auxiliaire choisi parmi un composé à base de carbonate substitué ou non substitué par un halogène, un composé à base de sultone, un composé à base de sulfate, un composé à base de phosphate ou un composé à base de phosphite, un composé à base de borate, un composé à base de nitrile, un composé à base d'amine, un composé à base de silane et un composé à base de sel de lithium.

9. Électrolyte non aqueux selon la revendication 1, dans lequel le solvant organique comprend un solvant organique à base de carbonate cyclique et un solvant organique à base de carbonate linéaire.

10. Électrolyte non aqueux selon la revendication 9, dans lequel le solvant organique à base de carbonate cyclique comprend du carbonate d'éthylène, et le solvant organique à base de carbonate linéaire comprend du diméthylcarbonate.

11. Batterie secondaire au lithium comprenant une électrode positive ; une électrode négative placée en face de l'électrode positive ; un séparateur interposé entre l'électrode positive et l'électrode négative ; et l'électrolyte non aqueux selon la revendication 1.

12. Batterie secondaire au lithium selon la revendication 11, dans laquelle l'électrode positive comprend un matériau actif d'électrode positive, et le matériau actif d'électrode positive comprend un matériau particulaire de phosphate de fer lithié.

13. Batterie secondaire au lithium selon la revendication 12, dans laquelle le matériau particulaire de phosphate de fer lithié comprend un composé représenté par la Formule A :
[Formule A] Li₁₊ₐFe₁₋ₛMₛ(PO_{4-b})X_{b}
dans la Formule A, M est un ou plusieurs éléments choisis parmi Co, Ni, Al, Mg, Ti et V, et X est F, S ou N, dans lequel 0≤s≤0,5 ; -0,5≤a≤+0,5 ; et 0≤b≤0,1.

14. Batterie secondaire au lithium selon la revendication 11, dans laquelle l'électrode négative comprend un matériau actif d'électrode négative, et le matériau actif d'électrode négative comprend un matériau actif à base de carbone.
